# EUROPÄISCHE PATENTSCHRIFT

(11) **EP 4 242 595 B1**
(45) Veröffentlichungstag und Bekanntmachung des Hinweises auf die Patenterteilung: **07.02.2024**
(21) Anmeldenummer: 22161462.1
(22) Anmeldetag: 10.03.2022
(51) Int. Cl.: G01D 5/347, G01D 5/249

(54) **VORRICHTUNG UND VERFAHREN ZUR POSITIONS-, LÄNGEN- ODER WINKELBESTIMMUNG**
POSITION, LENGTH OR ANGLE DETERMINATION DEVICE AND METHOD
DISPOSITIF ET PROCÉDÉ DE DÉTERMINATION DE POSITION, DE LONGUEUR OU D'ANGLE

(43) Veröffentlichungstag der Anmeldung: 13.09.2023
(73) Patentinhaber: SICK AG, 79183 Waldkirch (DE)
(72) Erfinder: Sellmer, Christian, 78166 Donaueschingen (DE); Thomae, Dominic, 79111 Freiburg (DE)
(74) Vertreter: Manitz Finsterwald Patent- und Rechtsanwaltspartnerschaft mbB

(56) Entgegenhaltungen:
- EP-A1- 0 116 636
- DE-C1- 19 518 664
- US-A1- 2015 069 225

## Beschreibung

Die vorliegende Erfindung betrifft eine Vorrichtung und ein Verfahren zur Positions-, Längen- oder Winkelbestimmung. Die Vorrichtung umfasst einen ersten und einen zweiten Teil, wobei der erste und der zweite Teil relativ zueinander bewegbar sind. Weiterhin umfasst die Vorrichtung eine an dem ersten Teil angebrachte Codierung, wobei die Codierung eine Vielzahl von Codeabschnitten umfasst, wobei die Codeabschnitte Bereiche erster Art und Bereiche zweiter Art umfassen, wodurch die Codierung geschaffen wird. Die Vorrichtung umfasst weiter eine an dem zweiten Teil angebrachte Auslesevorrichtung, die mehrere Sensoren umfasst, welche jeweils zur Erfassung von Codeabschnitten ausgebildet sind und jeweils einen Messwert ausgeben, Die Vorrichtung umfasst auch eine Auswerteeinheit, welche anhand der von der Auslesevorrichtung erfassten Messwerte eine Relativposition zwischen dem ersten und dem zweiten Teil ermittelt.

Vorrichtungen zur Positions-, Längen- oder Winkelbestimmung, die auch als Encoder bezeichnet werden, können in einer Vielzahl von technischen Bereichen eingesetzt werden. Beispielsweise können solche Vorrichtungen in Werkzeugmaschinen Verwendung finden, wobei eine Position oder Winkelmessung eines Werkzeugs relativ zu dem Werkstück ermöglicht wird. Andere Einsatzbereiche sind Drehwinkelsensoren und Motor-Feedback-Systeme.

Solche Vorrichtungen können beispielsweise optisch arbeiten und umfassen üblicherweise einen binären Code (d.h. die Codierung) welcher helle und dunkle Bereiche umfasst. Die Codierung kann beispielsweise durch eine Photodiodenanordnung detektiert und anschließend ausgewertet werden. Dabei wird häufig neben einer Relativposition, die auch als Inkrementalposition bezeichnet werden kann, eine Absolutposition benötigt. Hierzu werden im Allgemeinen mehrere, das heißt mindestens zwei Spuren mit binärem Code benötigt.

Nachteilig an der Verwendung von zumindest zwei separaten Spuren ist jedoch, dass für jede Spur eine Anordnung von Sensoren nötig ist. Dies erfordert zusätzlichen Platz und erhöht die Kosten.

Aus der Druckschrift DE 195 18 664 C1 ist ein Verfahren zur Bestimmung der Position zweier zueinander bewegbarer Körper bekannt. Die Druckschrift EP 0 116 636 A1 offenbart eine Positionsmessvorrichtung. In der Druckschrift US 2015 / 0 069 225 A1 ist eine Vorrichtung und ein Verfahren zur Absolutpositionsbestimmung beschrieben.

Es ist deshalb die der vorliegenden Erfindung zugrundeliegende Aufgabe, Vorrichtungen und Verfahren der eingangs genannten Art derart weiterzubilden, dass eine korrekte Ermittlung der Absolutposition in hoher Auflösung mit nur einer einzelnen codierten Spur möglich ist.

Diese Aufgabe wird gelöst durch den Gegenstand der unabhängigen Ansprüche.

Erfindungsgemäß ist die Vorrichtung zur Positions-, Längen-, oder Winkelbestimmung ausgebildet, in einem ersten Betriebszustand einen Grob-Wert der Messwerte mit einer Auflösung von einem Bit anhand eines vorbestimmten Schwellenwerts zu erfassen, und die Vorrichtung weiter ausgebildet ist, in einem zweiten Betriebszustand einen Fein-Wert mit einer Auflösung von zumindest zwei Bit basierend auf einem Messwert von zumindest einem Sensor zu erfassen.

Die erfindungsgemäße Vorrichtung weist somit zwei Betriebszustände auf, welche zumindest einen Messwert zweifach erfassen, einmal grob aufgelöst und einmal fein aufgelöst. Ein Grob-Wert hat dabei eine Auflösung von einem Bit, das heißt er kann entweder eine null oder eine eins annehmen. Dieser Wert wird unter Berücksichtigung eines vorbestimmten Schwellenwert erfasst, der typischerweise bei 50% oder 0,5 liegen kann.

Ein Fein-Wert hat eine Auflösung von zumindest zwei Bit und wird aus dem Grob-Wert eines Messwerts gebildet. Eine Auflösung von zwei Bit bedeutet vorliegend, dass der Fein-Wert die Zustände 00, 01, 10 und 11 annehmen kann. Der Grob-Wert und der Fein-Wert basieren dabei auf demselben Messwert von demselben Codeabschnitt.

Die Vorrichtung kann also ausgebildet sein, auf der Grundlage des Grob-Werts und insbesondere durch den Fein-Wert die Positions-, Längen- oder Winkelbestimmung vorzunehmen, wobei der Grob-Wert auf herkömmliche Weise zur Positions-, Längen- oder Winkelbestimmung verwendet werden kann, um einen Positions-, Längen- oder Winkelwert anzugeben. Der Fein-Wert kann dann dazu herangezogen werden, den anhand des Grob-Werts ermittelten Positions-, Längen- oder Winkelwert noch zu verbessern. Insbesondere kann der anhand des Grob-Werts ermittelten Positions-, Längen- oder Winkelwert noch innerhalb eines Codeabschnitts anhand des Fein-Werts verschoben werden. So kann durch die höhere Auflösung des Fein-Wert z.B. ermittelt werden, dass der verbesserte/genauere Positions-, Längen- oder Winkelwert eher an einem Ende des Codeabschnitts oder eher in der Mitte des Codeabschnitts liegt. Der verbesserte Positions-, Längen- oder Winkelwert kann schließlich von der Vorrichtung ausgegeben werden.

Die Codierung und die Auslesevorrichtung werden bevorzugt mit dem jeweiligen Teil der Vorrichtung mitbewegt. Dementsprechend können die Codierung und/oder die Auslesevorrichtung jeweils starr an dem ersten bzw. zweiten Teil angebracht sein. Durch eine Relativbewegung des ersten und des zweiten Teils zueinander wird bevorzugt ein anderer Teil der Codierung (d.h. ein anderes Codewort) in den Bereich der Auslesevorrichtung gebracht. Durch die Ermittlung des Codeworts kann dann auf die momentane Relativposition zwischen dem ersten und dem zweiten Teil rückgeschlossen werden.

Die Auslesevorrichtung erfasst die Codierung auf geeignete Art und Weise, beispielsweise optisch mittels Photodioden oder magnetisch mittels Hall-Sensoren oder magnetoresistiver Sensoren oder auch mittels kapazitiver oder induktiver Sensoren, wie später noch genauer ausgeführt. Die Auslesevorrichtung umfasst dabei eine Anzahl n von separaten Auslesebereichen. Die Auslesebereiche können beispielsweise durch eine einzelne oder mehrere kombiniert ausgelesene Sensoren, beispielsweise Photodioden, gebildet werden.

Die Codierung ist digital und/oder binär ausgestaltet. Es ist zu verstehen, dass die Codeabschnitte Bereiche erster Art und Bereiche zweiter Art umfassen. Dies bedeutet, dass ein jeweiliger Codeabschnitt entweder einen Bereich erster Art oder einen Bereich zweiter Art umfasst. Hierdurch schaffen die Bereiche erster und zweiter Art gemeinsam die Codierung.

Die Codierung kann dabei mehrere Codeworte aufweisen, wobei jedes Codewort eine vorbestimmte Anzahl von Codeabschnitten aufweist. Insbesondere umfasst die Vorrichtung mindestens genauso viele Sensoren wie die vorbestimmte Anzahl von Codeabschnitten.

Durch die erfindungsgemäße Lösung ist es möglich mit einer einzigen Codierung eine Position, eine Länge oder einen Winkel genau zu bestimmen, ohne eine zweite Codierung vorsehen zu müssen.

Gemäß einer Ausführungsform ist die Vorrichtung in dem zweiten Betriebszustand ausgebildet ist, den Fein-Wert basierend auf einem Messwert von mehreren Sensoren zu erfassen. Insbesondere kann der Fein-Wert von mehreren Sensoren gleichzeitig erfasst bzw. umgewandelt werden.

Dabei können die Sensoren benachbart oder voneinander beabstandet sein. Die Verwendung von zumindest zwei Sensoren für die Erfassung des Fein-Werts hilft dabei, die Messgenauigkeit zu erhöhen, beispielsweise durch Mittelwertbildung der von den mindestens zwei Sensoren ermittelten Fein-Werten. Außerdem kann die Verwendung von mindestens zwei Sensoren Redundanz bereitstellen. Wenn die Sensoren voneinander beabstandet sind, lassen sich besonders gut störende Umwelteffekte herausfiltern.

Hierdurch ergibt sich eine besonders genaue Vorrichtung.

Gemäß einer Ausführungsform ist die Vorrichtung ausgebildet, denjenigen von den mehreren Sensoren für die Erfassung des Fein-Werts auszuwählen, bei welchem aufgrund des ermittelten Grob-Werts ein Messwert nahe des vorbestimmten Schwellenwerts wahrscheinlich ist.

Dies kann insbesondere basierend auf dem Ergebnis des Grob-Wertes erfolgen. Wenn beispielsweise der Grob-Wert eines ersten Messwerts eine Null ergibt und der Grob-Wert eines danebenliegenden zweiten Messwerts eine Eins ergibt, deutet dies auf einen Messwert nahe des vorbestimmten Schwellenwerts hin. In diesem Fall werden insbesondere diese zwei nebeneinanderliegenden Sensoren dann verwendet um einen Fein-Wert zu bestimmen.

Hierdurch ergibt sich ebenfalls eine besonders genaue Vorrichtung.

Erfindungsgemäß ist die Vorrichtung ausgebildet, den Fein-Wert durch Anlegen des Messwerts des zumindest einen Sensors an einen Komparator und durch Vergleichen des Messwerts mit einem von einem Digital-Analog-Umsetzer erzeugtem, geänderten Schwellenwert zu erfassen.

Der Komparator und der Digital-Analog-Umsetzer ist dabei Teil der Auswerteeinheit. Beispielsweise wird für einen exemplarischen Messwert von 0,28 aufgrund eines vorbestimmten Schwellenwerts von 0,5 bei der Auslesung mit einem Bit Genauigkeit zunächst als Grob-Wert eine Null erfasst. Durch Vergleich des Messwerts mit dem vorbestimmten Schwellenwert ergibt sich, dass der Messwert 0,28 kleiner ist als 0,5. Nun kann der Messwert mit einem Vergleichswert von dem Digital-Analog-Umsetzer mit einer Genauigkeit von zwei Bit gebildet werden. Beispielsweise wird der Fein-Wert somit durch Vergleichen des Messwerts mit einem Vergleichswert von 0,25 gebildet. Der Vergleichswert kann auch als ein geänderter Schwellenwert bezeichnet werden.

Hierdurch wird eine schnelle und elektronisch einfache Vorrichtung ermöglicht.

Gemäß einer Ausführungsform ist die Vorrichtung derart ausgebildet, dass der Digital-Analog-Umsetzer den Vergleichswert variiert um eine Auflösung des Fein-Werts von zumindest drei Bit zu erreichen.

Ein Variieren meint vorliegend ein Ändern des Vergleichs- bzw. Schwellenwertes, insbesondere im Rahmen einer Auflösung von drei Bit. Das bedeutet, dass der Vergleichswert ganzzahlige Vielfache von 0,125 oder einen Wert von 000, 001, 010, 011, 100, 101, 110 oder 111 annehmen kann.

Dies kann für beliebig viele Bits Genauigkeit wiederholt werden, um so den erfassten Fein-Wert dem tatsächlichen Messwert anzunähern.

Hierdurch ergibt sich der Vorteil, dass die Genauigkeit weiter erhöht wird.

Gemäß einer Ausführungsform ist die Vorrichtung derart ausgebildet, dass der zumindest eine Sensor mit einem ersten Eingang des Komparators gekoppelt ist und der Digital-Analog-Umsetzer mit einem zweiten Eingang des Komparators gekoppelt ist.

Gemäß einer Ausführungsform ist die Vorrichtung derart ausgebildet, dass die Anzahl der Komparatoren gleich der Anzahl der Sensoren ist. Dabei kann jeder Sensor mit genau einem Komparator oder alternativ mit zwei oder mehreren Komparatoren gekoppelt sein.

Gemäß einer Ausführungsform ist die Vorrichtung derart ausgebildet, dass die Auswerteeinheit weiter ein Abtast-Halte-Glied umfasst, das ausgebildet ist, einen Messwert temporär zu speichern. Das Abtast-Halte-Glied ist dabei ausgebildet den Messwert bei der Erfassung des Grob-Werts zu speichern, sodass derselbe Messewert bei der Erfassung des Fein-Werts verwendet werden kann, dieser also unmittelbar aus dem Grob-Wert umgewandelt werden kann.

Hierdurch ergibt sich der Vorteil, dass eine Position, eine Länge oder ein Winkel geschwindigkeitsunabhängig erfasst werden kann.

Falls kein Abtast-Halte-Glied vorgesehen ist, werden in dem ersten Betriebszustand zunächst die Messwerte für den Grob-Wert erfasst und in dem zweiten Betriebszustand ein oder mehrere Messwerte für den Fein-Wert erneut erfasst.

Gemäß einer Ausführungsform ist die Vorrichtung derart ausgebildet, dass die Anzahl der Abtast-Halte-Glieder gleich der Anzahl der Sensoren ist.

Dabei kann je ein Abtast-Halte Glied für je einen Sensor vorgesehen und damit gekoppelt sein. Insbesondere können so die Messwerte von zwei oder mehreren Sensoren gleichzeitig umgewandelt werden.

Gemäß einer Ausführungsform ist die Vorrichtung zur optischen Positions-, Längen-, oder Winkelbestimmung ausgebildet ist, wobei die Bereiche erster Art Bereiche relativ höherer Helligkeit und die Bereiche zweiter Art Bereiche relativ niedrigerer Helligkeit umfassen, und wobei die Auslesevorrichtung zur optischen Erfassung der Codierung ausgebildet ist.

Gemäß einer Ausführungsform ist die Vorrichtung derart ausgebildet, dass ein Sensor jeweils durch genau eine oder mehrere Photodioden gebildet ist, wobei die Codierung mittels einer, insbesondere an dem ersten und/oder an dem zweiten Teil angebrachten, Lichtquelle beleuchtet wird, wobei die Beleuchtung bevorzugt im Durchlicht erfolgt.

Alternativ ist die Vorrichtung derart ausgebildet, dass ein Sensor jeweils durch genau einen oder mehrere Hall-Sensoren, genau einen oder mehrere magnetoresistive Sensoren oder durch genau einen oder mehrere kapazitive oder induktive Sensoren gebildet ist, wobei die Codierung aus stärker und schwächer magnetisierten Bereichen gebildet wird, insbesondere aus magnetisierten und nicht magnetisierten Bereichen gebildet wird.

Gemäß einer Ausführungsform ist die Vorrichtung derart ausgebildet, dass die Codierung einen Absolutcode umfasst und die Auswerteeinheit ausgebildet ist, eine Absolutposition zwischen dem ersten und dem zweiten Teil zu ermitteln.

Die Codierung kann dabei beispielsweise einen Pseudozufallscode oder einen Grey-Code umfassen. Der Absolutcode kann insbesondere keine sich wiederholenden Codeworte umfassen.

Hierdurch ergibt sich der Vorteil, dass nicht nur ein Relativwert, sondern auch ein Absolutwert der Position, der Länge oder des Winkels erfasst werden kann.

Gemäß einer Ausführungsform ist die Vorrichtung derart ausgebildet, dass der erste und der zweite Teil relativ zueinander um eine Drehachse verdrehbar sind und die Codierung und die Auslesebereiche jeweils entlang einer kreisförmigen Bahn angeordnet sind.

Hierdurch kann insbesondere ein Winkel bestimmt werden.

Alternativ kann der erste und der zweite Teil relativ zueinander entlang einer Geraden bewegbar sein, wobei die Codierung und die Auslesebereiche jeweils entlang einer Geraden angeordnet sind.

Hierdurch kann insbesondere eine Länge bestimmt werden.

Gemäß einer Ausführungsform ist die Vorrichtung derart ausgebildet, dass die Codeabschnitte jeweils eine gleiche Größe und/oder einen gleichen Versatz zueinander aufweisen.

Die Eingangs genannte Aufgabe wird auch gelöst durch ein Verfahren zur Positions-, Längen-, oder Winkelbestimmung, bei welchem ein erster und ein zweiter Teil relativ zueinander bewegt werden, an dem ersten Teil eine Codierung angebracht wird, wobei die Codierung eine Vielzahl von Codeabschnitten umfasst, wobei die Codeabschnitte Bereiche erster Art und Bereiche zweiter Art umfassen, wobei die Bereiche erster und zweiter Art die Codierung schaffen, eine an dem zweiten Teil angebrachte Auslesevorrichtung die Codierung erfasst, wobei die Auslesevorrichtung mehrere Sensoren umfasst, welche jeweils zur Erfassung von Codeabschnitten ausgebildet sind und jeweils einen Messwert ausgeben, anhand der von der Auswerteeinheit erfassten Messwerte eine Relativposition zwischen dem ersten und dem zweiten Teil ermittelt wird, wobei in einem ersten Betriebszustand ein Grob-Wert der Messwerte mit einer Auflösung von einem Bit anhand eines vorbestimmten Schwellenwerts erfasst wird, und in einem zweiten Betriebszustand ein Fein-Wert mit einer Auflösung von zumindest zwei Bit basierend auf einem Messwert von zumindest einem Sensor erfasst wird.

Die vorstehenden Erläuterungen zur erfindungsgemäßen Vorrichtung gelten für das erfindungsgemäße Verfahren entsprechend. Dies gilt insbesondere für Vorteile und Ausführungsformen.

Nachfolgend wird die Erfindung beispielhaft unter Bezugnahme auf die Zeichnungen beschrieben. Dabei zeigen:
- Fig. 1: eine Vorrichtung zur Positions- oder Längenbestimmung in schematischer Ansicht;
- Fig. 2: einen Ausschnitt der Vorrichtung aus Fig. 1, die eine Ausführungsform der Auswerteeinheit zeigt;
- Fig. 3: eine alternative Ausführungsform der Auswerteeinheit aus Fig. 2;
- Fig. 4: ein Ablaufdiagramm eines Verfahrens zur optischen Positions- oder Längenbestimmung; und
- Fig. 5: ein beispielhaftes mehrstufiges Auslesen einer Codierung.

In den Figuren bezeichnen gleiche Bezugszeichen gleiche oder ähnliche Merkmale.

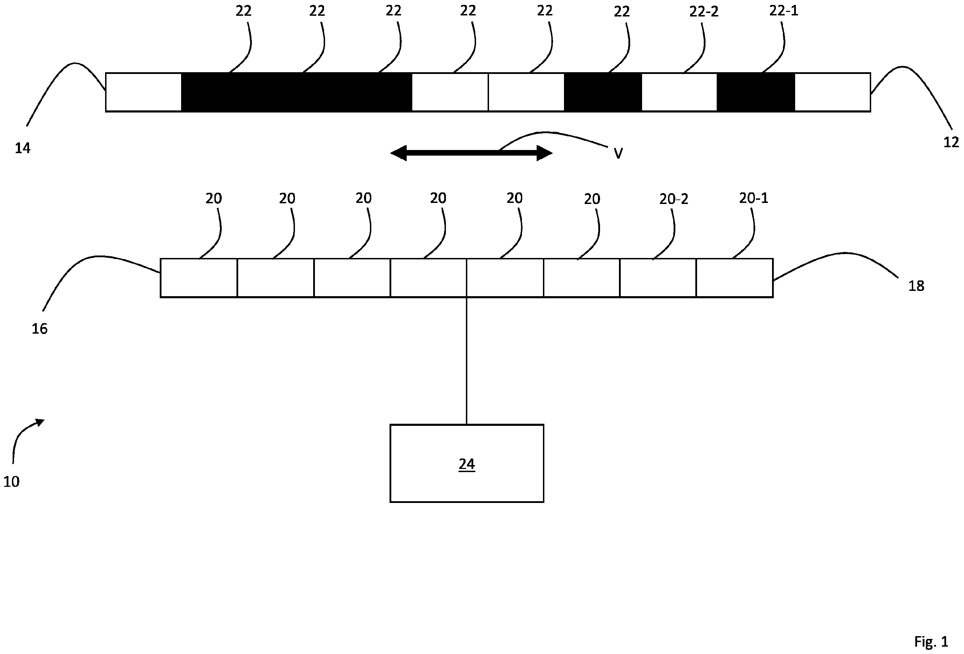

Fig. 1 zeigt eine Vorrichtung 10, welche zur Positions-, Längen-, oder Winkelbestimmung dient. Die Vorrichtung 10 kann z.B. Teil eines Servomotors oder eines Motor-Feedback-Systems (nicht gezeigt) sein.

Die Vorrichtung 10 umfasst eine Codierung 12, welche an einem ersten Teil 14 der Vorrichtung 10 angebracht ist und von dem ersten Teil 14 mitbewegt wird. Der erste Teil 14 ist nicht näher dargestellt und wird in der Fig. 1 stellvertretend durch die Codierung 12 gezeigt.

Die Vorrichtung 10 umfasst weiterhin eine Auslesevorrichtung 16, welche an einem zweiten Teil 18 der Vorrichtung 10 angebracht ist und von dem zweiten Teil 18 mitbewegt wird. Der erste Teil 14 und der zweite Teil 18 bzw. die Codierung 12 und die Auslesevorrichtung 16 sind relativ zueinander bewegbar und zwar geradlinig zueinander. Die Bewegung erfolgt entlang einer Verschieberichtung V.

Die Auslesevorrichtung 16 umfasst in dem Beispiel von Fig. 1 acht Photodioden 20, welche entlang einer geraden Linie hintereinander an der Auslesevorrichtung 16 angebracht sind. Jeweils eine einzelne Photodiode 20 dient dabei als separater bzw. einzelner Auslesebereich.

Die Photodioden 20 erfassen Codeabschnitte 22, wobei im Bereich der Auslesevorrichtung 16 zeitgleich jeweils zehn Codeabschnitte 22 angeordnet sind bzw. benachbart aber beabstandet zur Auslesevorrichtung 16 vorbeigeführt werden. Dabei sind sowohl die Photodioden als auch die Codeabschnitte äquidistant zueinander angeordnet.

In Betrieb der Vorrichtung 10 wird die Codierung 12 mittels einer (nicht gezeigten) Lichtquelle beleuchtet, welche an dem zweiten Teil 18 befestigt ist. Die Codierung 12 remittiert das Licht der Lichtquelle, wobei das remittierte Licht von den Photodioden 20 empfangen wird. In den Photodioden 20 entsteht dadurch ein elektrisches Signal, welches an eine Auswerteeinheit 24 weitergeleitet wird.

Die Auswerteeinheit 24 binarisiert in einem ersten Schritt das Signal der einzelnen Photodioden 20, sodass sich bei einer Photodiode, welche auf einen dunklen Codeabschnitt 22 (in der Fig. 1 schwarz dargestellt) als Signal eine "0" ergibt, wohingegen sich bei einem hellen Codeabschnitt 22 (in der Fig. 1 weiß dargestellt) als Signal eine "1" ergibt.

Es versteht sich, dass die Vorrichtung 10 auch im Durchlicht betrieben werden könnte, wobei die Lichtquelle dann derart z.B. am ersten Teil 14 befestigt sein könnte, um Licht durch die hellen Codeabschnitte 22 hindurch zu den Photodioden 20 zu emittieren.

Die Auswerteeinheit 24 erzeugt aus den Signalen dann eine binäre Zeichenfolge, in welcher jeweils die binarisierten Signale der einzelnen Photodioden 20 entsprechend der Reihenfolge der Photodioden 20 enthalten sind. Bei dem Beispiel von Fig. 1 mit acht Photodioden umfasst die binäre Zeichenfolge somit acht Zahlen bestehend aus Einsen und Nullen.

Diese Zeichenfolge entspricht einem Grob-Wert und bestimmt die Position, die Länge oder den Winkel grob und unter Kenntnis der Zeichenfolge absolut. Die Bestimmung des Fein-Werts wird im Zusammenhang mit den folgenden Figuren näher erläutert.

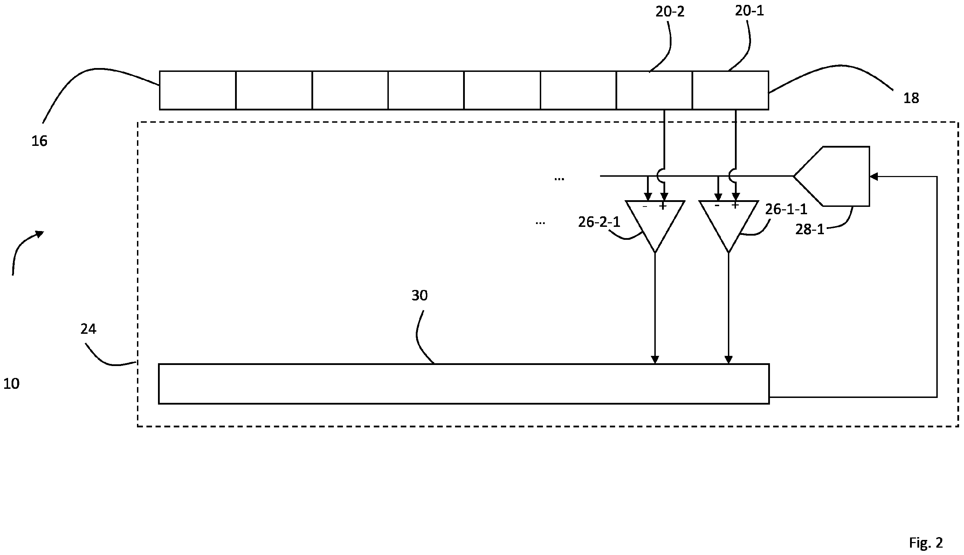

Fig. 2 zeigt einen Ausschnitt der Vorrichtung 10 wie in Fig. 1 gezeigt. Dabei ist im Detail eine Ausführungsform der Auswerteeinheit 24 abgebildet. Wie in Fig. 2 gezeigt ist je eine Photodiode mit einem Komparator gekoppelt, wobei die Komparatoren von der Auswerteeinheit umfasst sind. Aus Gründen der Einfachheit sind lediglich die Verbindungen der ersten Photodiode 20-1 und der zweiten Photodiode 20-2 im Detail gezeigt.

Die erste Photodiode 20-1 ist dabei mit einem positiven Eingang eines dazugehörigen ersten Komparators 26-1-1 verbunden und die zweite Photodiode 20-2 ist mit einem positiven Eingang eines dazugehörigen ersten Komparators 26-2-1 gekoppelt.

Ein ebenfalls von der Auswerteeinheit 24 umfasster erster Digital-Analog-Umsetzer 28-1 ist mit den negativen Eingängen der ersten Komparatoren 26-1-1 und 26-2-1 der ersten und zweiten Photodiode 20-1 und 20-2 gekoppelt.

Die Auswerteeinheit 24 umfasst auch eine Verarbeitungseinheit 30, wobei die Ausgänge des ersten Komparators 26-1-1 der ersten Photodiode 20-1 und des ersten Komparators 26-2-1 der zweiten Photodiode 20-2 mit der Verarbeitungseinheit 30 gekoppelt sind.

Die Verarbeitungseinheit 30 ist dabei mit dem ersten Digital-Analog-Umsetzer 28-1 rückgekoppelt.

Es versteht sich, dass die weiteren, nicht mit Bezugszeichen versehenen Photodioden ebenfalls einen jeweiligen dazugehörigen und aus Gründen den Übersichtlichkeit nicht gezeigten Komparator umfassen, der mit dem ersten Digital-Analog-Umsetzer 28-1 gekoppelt ist.

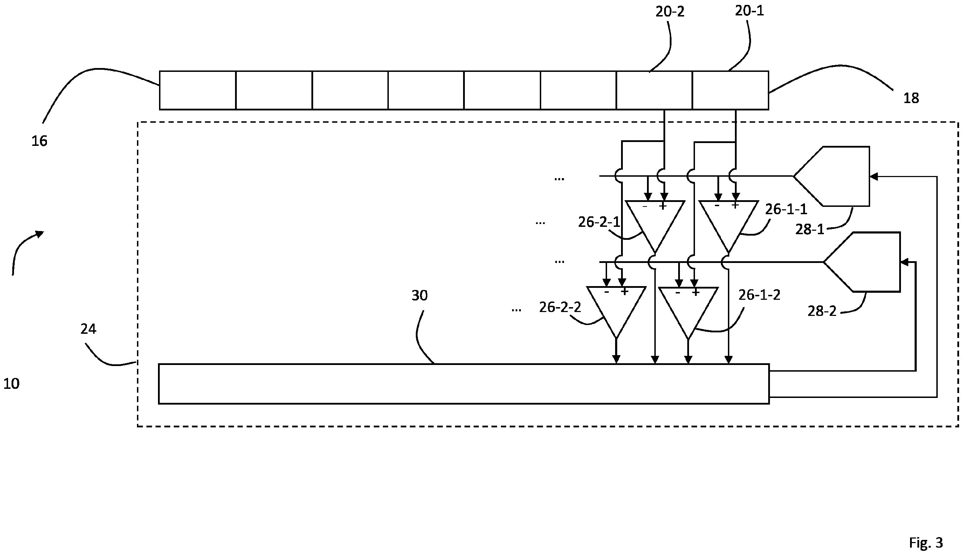

Fig. 3 zeigt eine alternative Ausführungsform der Auswerteeinheit 24 aus Fig. 2. Dabei weist die Auswerteeinheit 24 abweichend zur in Fig 2 gezeigten Ausführungsform zwei Digital-Analog-Umsetzer auf. Zusätzlich zu dem ersten Digital-Analog-Umsetzer 28-1 wie in Fig. 2 gezeigt ist ein zweiter Digital-Analog-Umsetzer 28-2 vorgesehen. Ebenso zusätzlich ist pro Photodiode ein zweiter Komparator vorgesehen. Dabei ist die erste Photodiode 20-1 mit dem positiven Eingang des zweiten Komparators 26-1-2 gekoppelt und die zweite Photodiode 20-2 ebenfalls mit dem positiven Eingang des zweiten Komparators 26-2-2.

Die Ausgänge des zweiten Komparators 26-1-2 der ersten Photodiode 20-1 und des zweiten Komparators 26-2-2 der zweiten Photodiode 20-2 sind, analog zu dem ersten Komparator 26-1-1 der ersten Photodiode 20-1 und zu dem ersten Komparator 26-2-1 der zweiten Photodiode 20-2, mit der Verarbeitungseinheit 30 gekoppelt.

Die Verarbeitungseinheit 30 ist dabei auch mit dem zweiten Digital-Analog-Umsetzer 28-2 rückgekoppelt.

Es versteht sich, dass die Auswerteeinheit 24 für die weiteren, nicht mit Bezugszeichen versehenen Photodioden ebenfalls jeweilige dazugehörige und aus Gründen den Übersichtlichkeit nicht gezeigte Komparatorpaare umfasst, die mit dem ersten bzw. zweiten Digital-Analog-Umsetzer 28-1, 28-2 gekoppelt sind.

Ebenfalls versteht sich, dass die Auswerteeinheit 24 auch mehr als zwei Komparatoren für jede Photodiode und mehr als zwei Digital-Analog-Umsetzer umfassen kann. Hierdurch wird die Auslesegeschwindigkeit weiter erhöht.

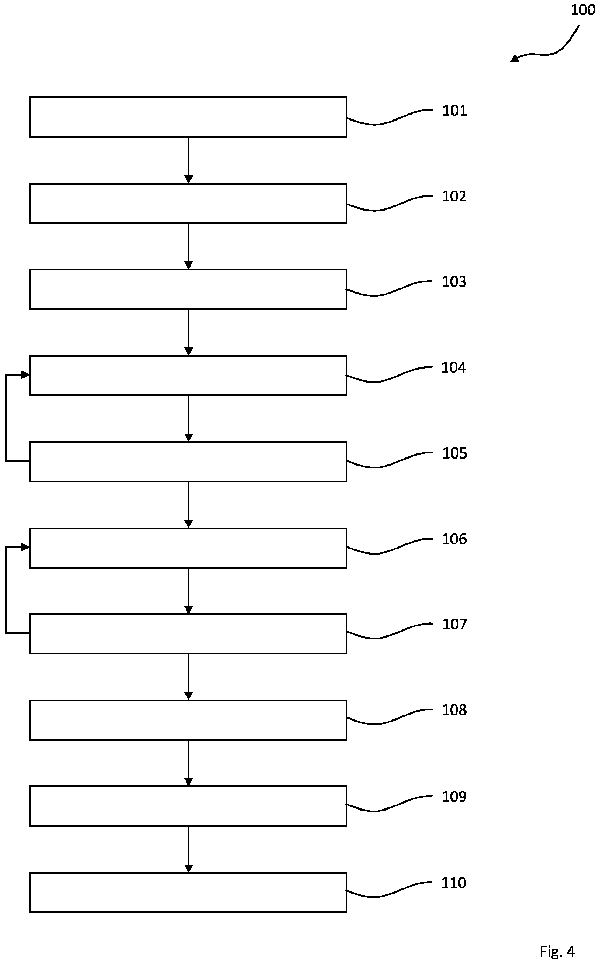

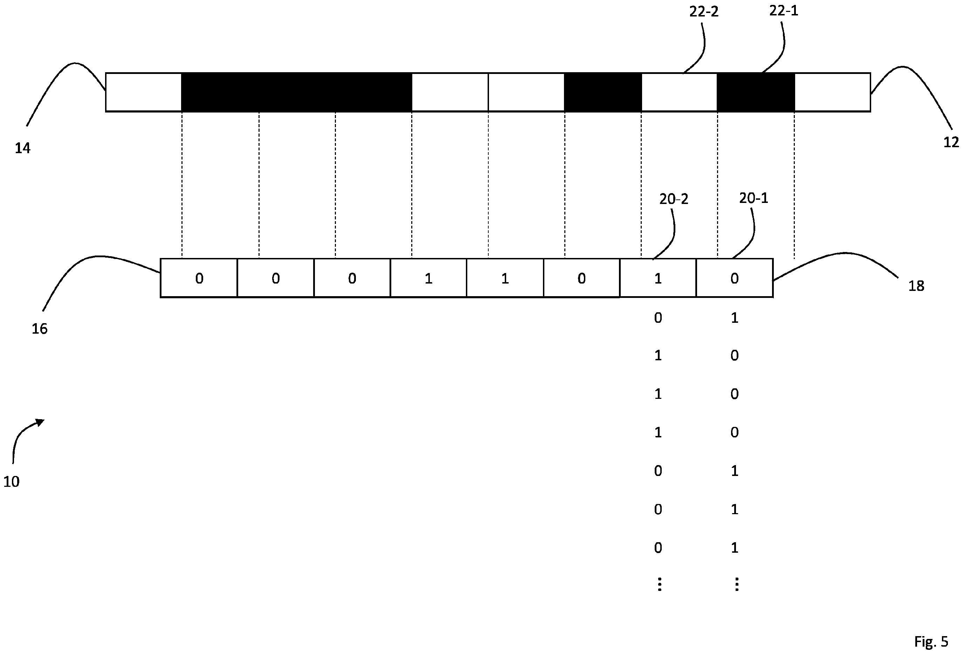

Die Funktion des bzw. der Digital-Analog-Umsetzer und der Komparatoren wird nun im Zusammenhang mit den Fig. 4 und 5 weiter erläutert.

Fig. 4 zeigt ein Ablaufdiagramm eines Verfahrens 100 zur Positions-, Längen-, oder Winkelbestimmung mittels einer in den Figuren 1 bis 3 gezeigten Vorrichtung.

In einem ersten Schritt 101 wird ein Schwellenwert des Digital-Analog-Umsetzers definiert. Dieser liegt beispielsweise und praktischerweise bei 50% oder 0,5. Dieser Schwellenwert dient als Filterkriterium zwischen Photodioden die klare Bitwerte, d.h. eins oder null, ermitteln, und Photodioden, die an einem Übergang zwischen einer Eins und einer Null liegen, d.h. solchen, die einen Wert nahe des Schwellenwertes haben.

In einem nächsten Schritt 102 werden alle vorhandenen Photodioden ausgelesen.

In einem folgenden Schritt 103 wird ein Paar von nebeneinanderliegenden Photodioden ausgewählt, die an einem Übergang von einer Null zu einer Eins oder von einer Eins zu einer Null liegen.

In einem weiteren Schritt 104 wird der Schwellenwert verändert und in einem darauffolgenden Schritt 105 der Wert von einer der beiden, beispielsweise einer ersten Photodiode erneut ausgelesen.

Die Schritte 104 und 105 werden so häufig wiederholt wie die Auflösung gewünscht ist bzw. wie hoch die Auflösung des Digital-Analog-Umsetzers ist, beispielsweise achtmal, oder, wie im Zusammenhang mit Fig. 5 erläutert, zwölfmal. Dabei wird vom relevantesten Bit (engl. most significant bit), dem ersten Bit, zum unrelevantesten Bit (engl. least significant bit), dem letzten Bit ausgelesen. Dieses Vorgehen kann auch als sukzessive Annäherung (engl. successive approximation) bezeichnet werden.

Es wird somit der Schwellenwert iterativ angepasst und sich somit Schritt für Schritt, abhängig von der Auflösung des Digital-Analog-Umsetzers, einem Wert, der dem prozentualen Bedeckungsanteil der Photodiode bzw. der Photodioden entspricht, angenähert. Dieser prozentuale Bedeckungsanteil entspricht dabei dem Fein-Wert der Position, der Länge oder des Winkels.

In den Schritten 106 und 107 wird entsprechend der Schwellenwert verändert und der Wert von der anderen von den beiden, beispielsweise einer zweiten Photodiode ausgelesen. Die Schritte 106 und 107 werden dann analog zu den Schritten 104 und 105 vom relevantesten Bit zum unrelevantesten Bit wiederholt. Es versteht sich, dass die Schritte 104 und 106 sowie 105 und 107 zusammen, d.h. zeitgleich ausgeführt werden können.

In einem darauffolgenden Schritt 108 wird die Absolutposition als Grob-Wert auf Basis aller ausgelesener Photodioden ermittelt und in einem weiteren Schritt 109 die Inkrementalposition basierend auf dem zuvor ermittelten Fein-Wert ermittelt.

In einem finalen Schritt 110 wird die Position basierend auf der Absolutposition und der Inkrementalposition ausgegeben.

Fig. 5 zeigt ein beispielhaftes mehrstufiges Auslesen einer einzigen Codierung durch die Vorrichtung gemäß Fig. 1 bis 3 gemäß dem Verfahren aus Fig. 4. Dabei werden zunächst alle Photodioden 20 mit einem vorbestimmten Schwellenwert von 0,5 ausgelesen. Dadurch ergibt sich die in der ersten Zeile angegebene Bitfolge entsprechend der Codierung 12, nämlich 0 0 0 1 1 0 1 0. Basierend hierauf wird dann unter Kenntnis der Codierung der Grob-Wert als Absolutwert bestimmt.

Sodann werden zwei benachbarte Photodioden ausgewählt, bei denen ein Übergang von einer Null zu einer Eins bzw. andersherum auftritt, in diesem Fall, die mit Bezugszeichen versehene erste Photodiode 20-1 und zweite Photodiode 20-2. Dies kann insbesondere unter Kenntnis der Codierung erfolgen, ist aber auch bereits aus der ersten Auslesung ersichtlich.

Nun wird für die erste Photodiode 20-1 analog zu den Schritten 104 und 105 und für die zweite Photodiode 20-2 analog zu den Schritten 106 und 107, wie in Fig. 4 gezeigt, der Schwellenwert geändert und die Photodiode erneut ausgelesen, bis die maximale Auflösung erreicht ist.

Für das in Fig. 5 gezeigte Beispiel wird angenommen, dass die Überdeckung der zweiten Photodiode 20-2 mit dem zweiten Codeabschnitt 22-2 0,72 oder 72% beträgt und die Überdeckung der ersten Photodiode 20-1 mit dem ersten Codeabschnitt 22-1 1-0,72=0,28 oder 28% beträgt. Hierfür ergeben sich somit die folgenden Werte:
Nachdem bereits in dem Schritt zuvor bei einem Schwellenwert 0,5 für die erste Photodiode 20-1 eine 0 und für die zweite Photodiode eine 1 ermittelt wurde, wird zunächst temporär das zweite Bit willkürlich auf 1 gesetzt. In einem darauffolgenden Vergleich wird mithilfe des Komparators überprüft ob der gemessene Wert der Photodiode über oder unter dem Schwellenwert liegt und dieser entsprechend geändert.

In dem vorliegenden Beispiel der zweiten Photodiode 20-2 liegt der Wert bei 0,72, ist also 0,22 größer als der vorbestimmte Schwellenwert von 0,5. Nun wird der Schwellenwert für die zweite Photodiode 20-2 geändert und zwar auf 0,25, was sodann mit dem Differenzwert 0,22 aus dem Komparator verglichen wird. Dabei wird der Schwellenwert entsprechend der Bitauflösung variiert, d.h. im ersten Schritt mit einer Auflösung von 0,25, im zweiten Schritt mit einer Auflösung von 0,125, im dritten Schritt mit einer Auflösung von 0,0625, etc.

Somit ergibt sich die folgende Tabelle 1 für die zweite Photodiode 20-2, wovon lediglich die ersten acht Stufen in Fig. 5 gezeigt sind:

| Stufe | | Differenzvergleich | Ergebnis |
|---|---|---|---|
| 01 | 1 0 0 0 0 0 0 0 0 0 0 0 | 0,720000 > 0,500000 | wahr |
| 02 | 1 1 0 0 0 0 0 0 0 0 0 0 | 0,220000 > 0,250000 | falsch |
| 03 | 1 0 1 0 0 0 0 0 0 0 0 0 | 0,220000 > 0,125000 | wahr |
| 04 | 1 0 1 1 0 0 0 0 0 0 0 0 | 0,095000 > 0,062500 | wahr |
| 05 | 1 0 1 1 1 0 0 0 0 0 0 0 | 0,032500 > 0,031250 | wahr |
| 06 | 1 0 1 1 1 1 0 0 0 0 0 0 | 0,001250 > 0,015625 | falsch |
| 07 | 1 0 1 1 1 0 1 0 0 0 0 | 0,001250 > 0,007812 | falsch |
| 08 | 1 0 1 1 1 0 0 1 0 0 0 0 | 0,001250 > 0,003906 | falsch |
| 09 | 1 0 1 1 1 0 0 0 1 0 0 0 | 0,001250 > 0,001953 | falsch |
| 10 | 1 0 1 1 1 0 0 0 0 1 0 0 | 0,001250 > 0,000977 | wahr |

| | | | |
|---|---|---|---|
| 11 | 1 0 1 1 1 0 0 0 0 1 1 0 | 0,000273 > 0,000488 | falsch |
| 12 | 1 0 1 1 1 0 0 0 0 1 0 1 | 0,000273 > 0,000244 | wahr |

Es ergibt sich somit das Codewort 1 0 1 1 1 0000 1 01, was einem Wert von 0,719970703125 entspricht.

Analog dazu ergibt sich für die erste Photodiode 20-1 das Komplement, also das Codewort 0 1 0 0 0 1 1 1 1 0 1 0, was einem Wert von 0,280029296875 entspricht.

Diese beiden Werte der ersten Photodiode 20-1 und der zweiten Photodiode 20-2 werden dann für die Bestimmung des Fein-Wertes des Absolutwertes verwendet.

### Bezugszeichenliste

- 10: Vorrichtung zur Positions-, Längen-, oder Winkelbestimmung
- 12: Codierung
- 14: erster Teil
- 16: Auslesevorrichtung
- 18: zweiter Teil
- 20: Photodiode
- 20-1: erste Photodiode
- 20-2: zweite Photodiode
- 22: Codeabschnitte
- 22-1: erster Codeabschnitt
- 22-2: zweiter Codeabschnitt
- 24: Auswerteeinheit
- 26-1-1: erster Komparator
- 26-1-2: zweiter Komparator
- 26-2-1: erster Komparator
- 26-2-2: zweiter Komparator
- 28-1: erster Digital-Analog-Umsetzer
- 28-2: zweiter Digital-Analog-Umsetzer
- 30: Verarbeitungseinheit
- 100: Verfahren zur Positions-, Längen-, oder Winkelbestimmung
- 101: Verfahrensschritt
- 102: Verfahrensschritt
- 103: Verfahrensschritt
- 104: Verfahrensschritt
- 105: Verfahrensschritt
- 106: Verfahrensschritt
- 107: Verfahrensschritt
- 108: Verfahrensschritt
- 109: Verfahrensschritt
- 110: Verfahrensschritt

## Patentansprüche

1. Vorrichtung (10) zur Positions-, Längen-, oder Winkelbestimmung, umfassend:
- einen ersten und einen zweiten Teil (14, 18), welche relativ zueinander bewegbar sind,
- eine an dem ersten Teil (14) angebrachte Codierung (12), wobei die Codierung (12) eine Vielzahl von Codeabschnitten (22) umfasst, wobei die Codeabschnitte (22) Bereiche erster Art und Bereiche zweiter Art umfassen, wobei die Bereiche erster und zweiter Art die Codierung (12) schaffen,
- eine an dem zweiten Teil (18) angebrachte Auslesevorrichtung (16) zur Erfassung der Codierung (12), wobei die Auslesevorrichtung (16) mehrere Sensoren umfasst, welche jeweils zur Erfassung von Codeabschnitten (22) ausgebildet sind und jeweils einen Messwert ausgeben, und
- eine Auswerteeinheit (24), welche anhand der von der Auslesevorrichtung erfassten Messwerte eine Relativposition zwischen dem ersten und dem zweiten Teil (14, 18) ermittelt,
wobei die Vorrichtung (10) ausgebildet ist, in einem ersten Betriebszustand einen Grob-Wert der Messwerte mit einer Auflösung von einem Bit anhand eines vorbestimmten Schwellenwerts zu erfassen, und
die Vorrichtung (10) weiter ausgebildet ist, in einem zweiten Betriebszustand einen Fein-Wert mit einer Auflösung von zumindest zwei Bit basierend auf zumindest einem der Messwerte von zumindest einem der Sensoren zu erfassen;
**dadurch gekennzeichnet , dass**
der Fein-Wert durch Anlegen zumindest eines der Messwerte des zumindest einen Sensors an einen Komparator (26-1-1) und durch Vergleichen des Messwerts mit einem von einem Digital-Analog-Umsetzer (28-1) erzeugtem Vergleichswert erfasst wird, wobei der Vergleichswert ein geänderter Schwellenwert ist.

2. Vorrichtung (10) nach dem vorhergehenden Anspruch 1,
**dadurch gekennzeichnet , dass**
die Vorrichtung (10) in dem zweiten Betriebszustand ausgebildet ist, den Fein-Wert basierend auf dem Messwert von mehreren Sensoren zu erfassen.

3. Vorrichtung (10) nach dem vorhergehenden Anspruch 2,
**dadurch gekennzeichnet , dass**
derjenige von den mehreren Sensoren für die Erfassung des Fein-Werts ausgewählt wird, bei welchem aufgrund des ermittelten Grob-Werts ein Messwert nahe des vorbestimmten Schwellenwerts wahrscheinlich ist.

4. Vorrichtung (10) nach einem der vorhergehenden Ansprüche,
**dadurch gekennzeichnet , dass**
der Digital-Analog-Umsetzer (28-1) den Vergleichswert variiert um eine Auflösung des Fein-Werts von zumindest drei Bit zu erreichen.

5. Vorrichtung (10) nach einem der vorhergehenden Ansprüche,
**dadurch gekennzeichnet , dass**
der zumindest eine Sensor mit einem ersten Eingang des Komparators (26-1-1) gekoppelt ist und der Digital-Analog-Umsetzer (28-1) mit einem zweiten Eingang des Komparators (26-1-1) gekoppelt ist.

6. Vorrichtung (10) nach einem der vorhergehenden Ansprüche,
**dadurch gekennzeichnet , dass**
die Anzahl der Komparatoren gleich der Anzahl der Sensoren ist.

7. Vorrichtung (10) nach einem der vorhergehenden Ansprüche,
**dadurch gekennzeichnet , dass**
die Auswerteeinheit weiter ein Abtast-Halte-Glied umfasst, das ausgebildet ist, einen Messwert temporär zu speichern.

8. Vorrichtung (10) nach dem vorhergehenden Anspruch 7,
**dadurch gekennzeichnet , dass**
die Anzahl der Abtast-Halte-Glieder gleich der Anzahl der Sensoren ist.

9. Vorrichtung (10) nach einem der vorhergehenden Ansprüche,
**dadurch gekennzeichnet , dass**
die Vorrichtung (10) zur optischen Positions-, Längen-, oder Winkelbestimmung ausgebildet ist, wobei die Bereiche erster Art Bereiche relativ höherer Helligkeit und die Bereiche zweiter Art Bereiche relativ niedrigerer Helligkeit umfassen, und wobei die Auslesevorrichtung (16) zur optischen Erfassung der Codierung (12) ausgebildet ist.

10. Vorrichtung (10) nach dem vorhergehenden Anspruch 9,
**dadurch gekennzeichnet , dass**
ein Sensor jeweils durch genau eine oder mehrere Photodioden (20) gebildet ist, wobei die Codierung (12) mittels einer, insbesondere an dem ersten und/oder an dem zweiten Teil (14, 18) angebrachten, Lichtquelle beleuchtet wird, wobei die Beleuchtung insbesondere im Durchlicht erfolgt.

11. Vorrichtung (10) nach einem der vorhergehenden Ansprüche,
**dadurch gekennzeichnet , dass**
die Codierung (12) einen Absolutcode umfasst und die Auswerteeinheit (24) ausgebildet ist, eine Absolutposition zwischen dem ersten und dem zweiten Teil (14, 18) zu ermitteln.

12. Vorrichtung (10) nach einem der vorhergehenden Ansprüche,
**dadurch gekennzeichnet , dass**
der erste und der zweite Teil (14, 18) relativ zueinander um eine Drehachse verdrehbar sind und die Codierung (12) und die Sensoren jeweils entlang einer kreisförmigen Bahn angeordnet sind.

13. Vorrichtung (10) nach einem der vorhergehenden Ansprüche,
**dadurch gekennzeichnet , dass**
die Codeabschnitte (22) jeweils eine gleiche Größe und/oder einen gleichen Versatz zueinander aufweisen.

14. Verfahren (100) zur Positions-, Längen-, oder Winkelbestimmung, bei welchem
- ein erster und ein zweiter Teil (14, 18) relativ zueinander bewegt werden,
- an dem ersten Teil (14) eine Codierung (12) angebracht wird, wobei die Codierung (12) eine Vielzahl von Codeabschnitten (22) umfasst, wobei die Codeabschnitte (22) Bereiche erster Art und Bereiche zweiter Art umfassen, wobei die Bereiche erster und zweiter Art die Codierung (12) schaffen,
- eine an dem zweiten Teil (18) angebrachte Auslesevorrichtung (16) die Codierung (12) erfasst, wobei die Auslesevorrichtung (16) mehrere Sensoren umfasst, welche jeweils zur Erfassung von Codeabschnitten (22) ausgebildet sind und jeweils einen Messwert ausgeben,
- anhand der von der Auswerteeinheit (24) erfassten Messwerte eine Relativposition zwischen dem ersten und dem zweiten Teil (14, 18) ermittelt wird, in einem ersten Betriebszustand ein Grob-Wert der Messwerte mit einer Auflösung von einem Bit anhand eines vorbestimmten Schwellenwerts erfasst wird, und
in einem zweiten Betriebszustand ein Fein-Wert mit einer Auflösung von zumindest zwei Bit basierend auf zumindest einem der Messwerte von zumindest einem der Sensor erfasst wird,
**dadurch gekennzeichnet, dass**
der Fein-Wert durch Anlegen zumindest eines der Messwerte des zumindest einen Sensors an einen Komparator (26-1-1) und durch Vergleichen des Messwerts mit einem von einem Digital-Analog-Umsetzer (28-1) erzeugtem Vergleichswert erfasst wird, wobei der Vergleichswert ein geänderter Schwellenwert ist.

## Claims

1. An apparatus (10) for position, length or angle determination, comprising
- a first and a second part (14, 18) which are movable relative to one another;
- a coding (12) applied to the first part (14), wherein the coding (12) comprises a plurality of code sections (22), wherein the code sections (22) comprise regions of a first kind and regions of a second kind, wherein the regions of a first and second kind create the coding (12);
- a readout apparatus (16) attached to the second part (18) for detecting the coding (12), wherein the readout apparatus (16) comprises a plurality of sensors which are each configured to detect code sections (22) and each output a measurement value; and
- an evaluation unit (24) which determines a relative position between the first and second part (14, 18) based on the measurement values detected by the readout apparatus,
wherein the apparatus (10) is configured, in a first operating state, to detect a rough value of the measurement values with a resolution of one bit based on a predetermined threshold value, and
the apparatus (10) is further configured, in a second operating state, to detect a fine value with a resolution of at least two bits based on at least one of the measurement values from at least one of the sensors,
**characterized in that**
the fine value is detected by applying at least one of the measurement values of the at least one sensor to a comparator (26-1-1) and by comparing the measurement value with a comparison value generated by a digital-to-analog converter (28-1), with the comparison value being a modified threshold value.

2. An apparatus (10) according to the preceding claim 1,
**characterized in that**
the apparatus (10) is configured, in the second operating state, to detect the fine value based on the measurement value from a plurality of sensors.

3. An apparatus (10) according to the preceding claim 2,
**characterized in that**,
for the detection of the fine value, that one of the plurality of sensors is selected for which a measurement value close to the predetermined threshold value is probable based on the determined rough value.

4. An apparatus (10) according to any one of the preceding claims,
**characterized in that**
the digital-to-analog converter (28-1) varies the comparison value to achieve a resolution of the fine value of at least three bits.

5. An apparatus (10) according to any one of the preceding claims,
**characterized in that**
the at least one sensor is coupled to a first input of the comparator (26-1-1) and the digital-to-analog converter (28-1) is coupled to a second input of the comparator (26-1-1).

6. An apparatus (10) according to any one of the preceding claims, **characterized in that**
the number of comparators is equal to the number of sensors.

7. An apparatus (10) according to any one of the preceding claims,
**characterized in that**
the evaluation unit further comprises a sample-and-hold element which is configured to temporarily store a measurement value.

8. An apparatus (10) according to the preceding claim 7,
**characterized in that**
the number of the sample-and-hold elements is equal to the number of sensors.

9. An apparatus (10) according to any one of the preceding claims,
**characterized in that**
the apparatus (10) is configured for an optical position, length or angle determination, wherein the regions of a first kind comprise regions of a relatively higher brightness and the regions of a second kind comprise regions of a relatively lower brightness, and wherein the readout apparatus (16) is configured for an optical detection of the coding (12).

10. An apparatus (10) according to the preceding claim 9,
**characterized in that**
a sensor is formed in each case by exactly one or more photodiodes (20), with the coding (12) being illuminated by means of a light source which is in particular attached to the first and/or the second part (14, 18), with the illumination in particular taking place in transmitted light.

11. An apparatus (10) according to any one of the preceding claims,
**characterized in that**
the coding (12) comprises an absolute code and the evaluation unit (24) is configured to determine an absolute position between the first and the second part (14, 18).

12. An apparatus (10) according to any one of the preceding claims,
**characterized in that**
the first and second part (14, 18) are rotatable relative to one another about an axis of rotation and the coding (12) and the sensors are each arranged along a circular path.

13. An apparatus (10) according to any one of the preceding claims,
**characterized in that**
the code sections (22) each have the same size and/or the same offset from one another.

14. A method (100) for position, length or angle determination, in which
- a first and a second part (14, 18) are moved relative to one another,
- a coding (12) is applied to the first part (14), wherein the coding (12) comprises a plurality of code sections (22), wherein the code sections (22) comprise regions of a first kind and regions of a second kind, wherein the regions of a first and second kind create the coding (12),
- a readout apparatus (16) attached to the second part (18) detects the coding (12), wherein the readout apparatus (16) comprises a plurality of sensors which are each configured to detect code sections (22) and each output a measurement value,
- a relative position between the first and second part (14, 18) is determined based on the measurement values detected by the evaluation unit (24), in a first operating state, a rough value of the measurement values with a resolution of one bit is detected based on a predetermined threshold value, and
in a second operating state, a fine value with a resolution of at least two bits is detected based on at least one of the measurement values from at least one of the sensors,
**characterized in that**
the fine value is detected by applying at least one of the measurement values of the at least one sensor to a comparator (26-1-1) and by comparing the measurement value with a comparison value generated by a digital-to-analog converter (28-1), with the comparison value being a modified threshold value.

## Revendications

1. Dispositif (10) de détermination de la position, de la longueur ou de l'angle, comprenant :
- une première et une seconde partie (14, 18), qui sont déplaçables l'une par rapport à l'autre,
- un codage (12) fixé à la première partie (14), le codage (12) comprenant une pluralité de sections de code (22), les sections de code (22) comprenant des zones d'un premier type et des zones d'un second type, les zones du premier et du second type créant le codage (12),
- un dispositif de lecture (16) fixé à la seconde partie (18) pour détecter le codage (12), le dispositif de lecture (16) comprenant plusieurs capteurs qui sont conçus chacun pour détecter des sections de code (22) et qui émettent chacun une valeur de mesure, et
- une unité d'évaluation (24) qui détermine une position relative entre la première et la seconde partie (14, 18) à l'aide des valeurs de mesure détectées par le dispositif de lecture,
dans lequel
le dispositif (10) est conçu pour détecter, dans un premier état de fonctionnement, une valeur grossière des valeurs de mesure avec une résolution d'un bit à l'aide d'une valeur seuil prédéfinie, et
le dispositif (10) est en outre conçu pour détecter, dans un second état de fonctionnement, une valeur fine avec une résolution d'au moins deux bits en se basant sur l'une au moins des valeurs de mesure de l'un au moins des capteurs ;
**caractérisé en ce que**
la valeur fine est détectée en appliquant l'une au moins des valeurs de mesure dudit au moins un capteur à un comparateur (26-1-1) et en comparant la valeur de mesure à une valeur de comparaison générée par un convertisseur numérique-analogique (28-1), la valeur de comparaison étant une valeur seuil modifiée.

2. Dispositif (10) selon la revendication précédente 1,
**caractérisé en ce que**
dans le second état de fonctionnement, le dispositif (10) est conçu pour détecter la valeur fine en se basant sur la valeur de mesure de plusieurs capteurs.

3. Dispositif (10) selon la revendication précédente 2,
**caractérisé en ce que**
pour la détection de la valeur fine, celui de la pluralité de capteurs est sélectionné, pour lequel une valeur de mesure, proche de la valeur seuil prédéfinie, est probable en raison de la valeur grossière déterminée.

4. Dispositif (10) selon l'une des revendications précédentes,
**caractérisé en ce que**
le convertisseur numérique-analogique (28-1) fait varier la valeur de comparaison pour obtenir une résolution de la valeur fine d'au moins trois bits.

5. Dispositif (10) selon l'une des revendications précédentes,
**caractérisé en ce que**
ledit au moins un capteur est couplé à une première entrée dudit comparateur (26-1-1), et ledit convertisseur numérique-analogique (28-1) est couplé à une seconde entrée dudit comparateur (26-1-1).

6. Dispositif (10) selon l'une des revendications précédentes, **caractérisé en ce que**
le nombre de comparateurs est égal au nombre de capteurs.

7. Dispositif (10) selon l'une des revendications précédentes,
**caractérisé en ce que**
l'unité d'évaluation comprend en outre un organe d'échantillonnage et de maintien configuré pour mémoriser temporairement une valeur de mesure.

8. Dispositif (10) selon la revendication précédente 7,
**caractérisé en ce que**
le nombre d'organes d'échantillonnage et de maintien est égal au nombre de capteurs.

9. Dispositif (10) selon l'une des revendications précédentes,
**caractérisé en ce que**
le dispositif (10) est conçu pour la détermination optique de la position, de la longueur ou de l'angle, les zones de premier type comprenant des zones de luminosité relativement plus élevée et les zones de second type comprenant des zones de luminosité relativement plus faible, et le dispositif de lecture (16) étant conçu pour la détection optique du codage (12).

10. Dispositif (10) selon la revendication précédente 9,
**caractérisé en ce que**
un capteur respectif est formé par exactement une ou plusieurs photodiodes (20), le codage (12) étant éclairé au moyen d'une source lumineuse, en particulier fixée à la première et/ou à la seconde partie (14, 18), l'éclairage étant en particulier réalisé en lumière transmise.

11. Dispositif (10) selon l'une des revendications précédentes, **caractérisé en ce que**
le codage (12) comprend un code absolu, et l'unité d'évaluation (24) est conçue pour déterminer une position absolue entre la première et la seconde partie (14, 18).

12. Dispositif (10) selon l'une des revendications précédentes,
**caractérisé en ce que**
la première et la seconde partie (14, 18) peuvent tourner l'une par rapport à l'autre autour d'un axe de rotation, et le codage (12) et les capteurs sont disposés chacun le long d'une trajectoire circulaire.

13. Dispositif (10) selon l'une des revendications précédentes,
**caractérisé en ce que**
les sections de code (22) présentent chacune une même taille et/ou un même décalage les unes par rapport aux autres.

14. Procédé (100) de détermination de la position, de la longueur ou de l'angle, dans lequel
- une première et une seconde partie (14, 18) sont déplacées l'une par rapport à l'autre,
- un codage (12) est fixé à la première partie (14), le codage (12) comprenant une pluralité de sections de code (22), les sections de code (22) comprenant des zones de premier type et des zones de second type, les zones de premier et de second type créant le codage (12),
- un dispositif de lecture (16) fixé à la seconde partie (18) détecte le codage (12), le dispositif de lecture (16) comprenant plusieurs capteurs qui sont conçus chacun pour détecter des sections de code (22) et qui émettent chacun une valeur de mesure,
- une position relative entre la première et la seconde partie (14, 18) est déterminée à l'aide des valeurs de mesure détectées par l'unité d'évaluation (24),
dans un premier état de fonctionnement, une valeur grossière des valeurs de mesure est détectée avec une résolution d'un bit à l'aide d'une valeur seuil prédéfinie, et
dans un second état de fonctionnement, une valeur fine avec une résolution d'au moins deux bits est détectée en se basant sur l'une au moins des valeurs de mesure de l'un au moins des capteurs,
**caractérisé en ce que**
la valeur fine est détectée en appliquant l'une au moins des valeurs de mesure dudit au moins un capteur à un comparateur (26-1-1) et en comparant la valeur de mesure à une valeur de comparaison générée par un convertisseur numérique-analogique (28-1), la valeur de comparaison étant une valeur seuil modifiée.
